Europäisches Patentamt

European Patent Office

Office européen des brevets

(11) Veröffentlichungsnummer: **0 287 835**
**A2**

## EUROPÄISCHE PATENTANMELDUNG

(21) Anmeldenummer: **88104753.4**

(22) Anmeldetag: **24.03.88**

(51) Int. Cl.4 **B60Q 1/26**

(30) Priorität: **25.03.87 DE 8704437 U**

(43) Veröffentlichungstag der Anmeldung:
**26.10.88 Patentblatt 88/43**

(84) Benannte Vertragsstaaten:
**AT BE CH DE ES FR GB GR IT LI NL SE**

(71) Anmelder: **Gruber, Inge**
**Stodieks Hof 81**
**D- 4802 Halle/Westfalen(DE)**

(72) Erfinder: **Gruber, Inge**
**Stodieks Hof 81**
**D- 4802 Halle/Westfalen(DE)**

(74) Vertreter: **Hoefer, Theodor, Dipl.-Ing.**
**Kreuzstrasse 32**
**D-4800 Bielefeld 1(DE)**

(54) **Leuchtschildkasten.**

(57) Bei einem Leuchtschildkasten für die Abringung am Dach eines Kraftfahrzeuges, mit einem Anzeigesymbole oder Hinweisbeschriftung, wie "Taxi" o.dgl. enthaltenden Leuchtschild, weist das Leuchtschild (11) eine dachähnlich gewölbte Form mit zwei parallelen geradlinigen Unterkanten (14) und zwei parallelen gekrümmten Seitenkanten (15) auf und ist in einem Trägerteil (10) mit entsprechend geformten Anlagekanten integriert. Dabei kann das Leuchtschild (11) einen konstanten, die Form der Seitenkanten (15) bildenden Querschnitt, wie parabelförmig, aufweisen.

Fig.2

EP 0 287 835 A2

## Leuchtschildkasten

Die Erfindung betrifft einen Leuchtschildkasten für die Anbringung am Dach eines Kraftfahrzeugs, mit einem Anzeigesymbole oder Hinweisbeschriftungen, wie "Taxi" o.dgl. enthaltenden Leuchtschild.

Derartige bekannte Leuchtschilder werden beispielsweise bei als Taxen verwendeten Personenkraftwagen benutzt, wo sie an einer quer über dem Dach des Wagens sich erstreckenden lösbaren Stange befestigt sind. Ein solcher Kasten ist im allgemeinen quaderförmig ausgebildet und hat zwei Leuchtschilder mit der Aufschrift "Taxi" o.dgl., wobei das eine in Fahrtrichtung und das andere nach hinten zeigt.

Wenn ein solches Fahrzeug in einer Waschstraße gereinigt werden soll, ist es erforderlich, die gesamte Trägerstange vorher abzumontieren, da sie als oberhalb des Daches abstehendes Teil ein Hindernis für die Bürstenwalzen der Waschanlage darstellen würde. Außerdem stellt die Stange mit dem Leuchtschildkasten, dessen beschriftete Seiten senkrecht verlaufen, einen beträchtlichen Strömungswiderstand während der Fahrt dar, so daß sich ein hoher Karosserie-Widerstandsbeiwert $C_w$ mit aufmontiertem Leuchtschildkasten ergibt.

Der Erfindung liegt die Aufgabe zugrunde, den Leuchtschildkasten so zu verbessern, daß dieser infolge einer günstigen Formgebung nach seiner Anbringung am Fahrzeug dessen Strömungswiderstandsbeiwert nicht nennenswert erhöht, sondern vorzugsweise erniedrigt. Dabei soll die Form des Leuchtschildkastens es ermöglichen, das Fahrzeug in einer Waschanlage mit dem Leuchtschildkasten reinigen zu lassen.

Diese Aufgabe wird erfindungsgemäß dadurch gelöst, daß das Leuchtschild eine dachähnlich gewölbte Form mit zwei parallelen geradlinigen Unterkanten und zwei parallelen gekrümmten Seitenkanten aufweist und in einem Trägerteil mit entsprechend geformten Anlagekanten integriert ist. Das Trägerteil kann dabei unmittelbar auf der Dachoberfläche aufliegen, so daß ein Spalt zwischen dem Leuchtschildkasten und dem Dach verhindert wird. Infolge der dachähnlich gewölbten Form des Leuchtschildes ergibt sich für die Luftströmung ein ähnlicher Übergang von der Dachoberfläche auf das Leuchtschild, wie von der Oberfläche der Motorhaube zur Windschutzscheibe. Entsprechend ist der Übergang an der Rückseite des Leuchtschildkastens.

Bevorzugt weist das Leuchtschild einen konstanten, die Form der Seitenkanten bestimmenden Querschnitt auf. Es handelt sich also um eine Scheibe, die man sich aus der ebenen Form in einer Richtung in die gewölbte Form angehoben denken kann. Dabei bleiben die beiden langen Rechteckseiten parallel, während die kurzen Rechteckseiten zu gekrümmten Seitenkanten werden. Der Querschnitt des Leuchtschildes ist bevorzugt parabelförmig ausgebildet.

In dem Trägerteil unterhalb des Leuchtschildes ist bevorzugt ein Lampenraum mit mehreren Glühlampen vorgesehen, der von einem Boden des Trägerteils nach unten begrenzt ist. Das auf dem Dach des Wagen montierte Trägerteil umfaßt also einen oberhalb des Daches befindlichen Boden und einen über dem Boden befindlichen Lampenraum, der von dem gewölbten Leuchtschild abgedeckt und verschlossen ist.

Die Glühllampen befinden sich also an der Rückseite der auf dem Leuchtschild angebrachten Beschriftung. Das Leuchtschild läßt nur an den Stellen Licht durchscheinen, wo sich Buchstaben oder Symbole befinden, so daß diese Informationen im Dunkeln dem Betrachter entgegenleuchten, während die übrige Fläche des Leuchtschildes unsichtbar bleibt.

Bevorzugt sind in dem Lampenraum von dem Boden des Trägerteils aufragende, zu den Ebenen der Seitenkanten des Leuchtschilds parallele Trennwände angeordnet. Diese bieten eine zusätzliche Abstützungsmöglichkeit für das Leuchtschild und begrenzen die Teile des Leuchtschildes, die beleuchtet werden sollen. Dabei können die Trennwände bevorzugt eine lichtreflektierende Oberfläche erhalten, so daß die Lichtausbeute der Glühlampen unter dem Leuchtschild besser wird.

Bevorzugt ist die Grundfläche des Trägerteils von einer unterhalb des Bodens befindlichen, längs einer geschlossenen Linie umlaufenden Unterkante begrenzt. Auf diese Weise werden größere Spalte zwischen dem Trägerteil und der Dachoberfläche vermieden. Das Trägerteil ist bevorzugt längs der umlaufenden Unterkante mit einem elastischen Dichtungsstreifen beidseitig belegt, so daß Wasser in den Innenraum des Trägerteils unter dem Boden nicht eindringen kann. Auch die Trennfugen zwischen dem Leuchtschild und dem Trägerteil sind abgedichtet, so daß auch hier Wasser nicht eindringen kann.

Das Trägerteil ist bevorzugt als einstückiges Kunststoffteil ausgebildet. Das Leuchtschild kann ebenso aus einem geeigneten Kunststoff geformt sein, so daß der gesamte Leuchtschildkasten ein geringes Gewicht erhält und somit die Fahrzeugmasse praktisch nicht verändert.

Bevorzugte Ausführungsformen der Erfindung sind in den Unteransprüchen enthalten. Der Schutzumfang erstreckt sich nicht nur auf die beanspruchten Einzelmerkmale, sonder auch auf deren Kombination.

Ein Ausführungsbeispiel der Erfindung ist in der Zeichnung dargestellt und wird im folgenden näher beschrieben. Es zeigen:

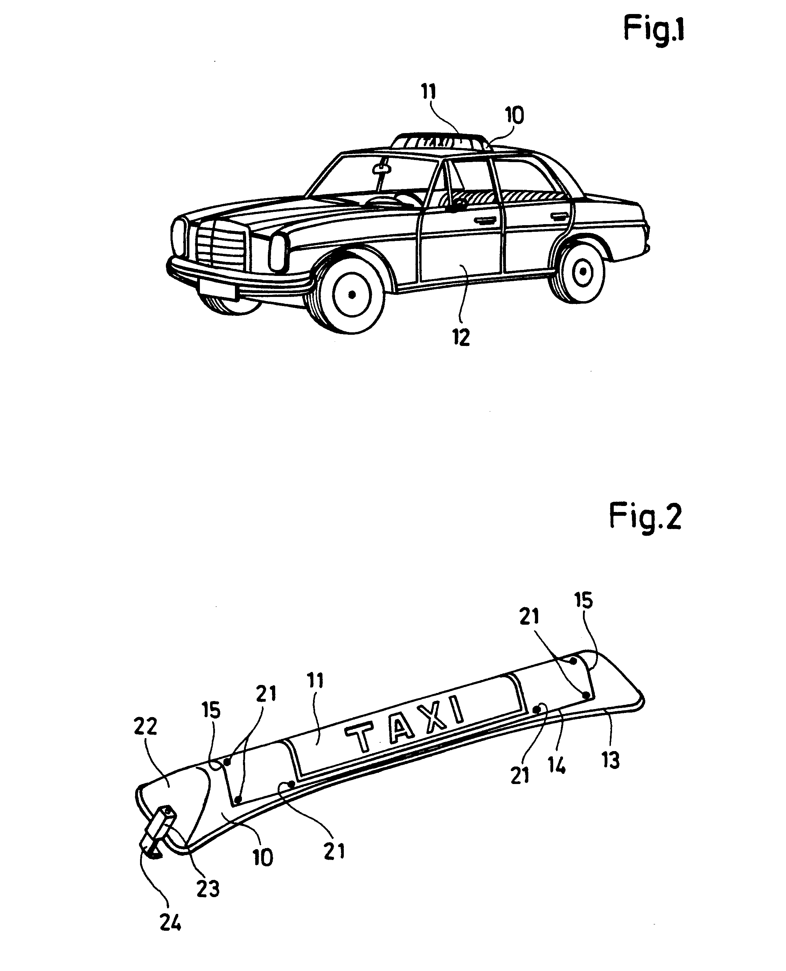

Fig.1 eine perspektivische Ansicht eines Personenkraftwagens mit einem aufmontierten Leuchtschildkasten;

Fig.2 eine perspektivische Ansicht eines Leuchtschildkastens;

Fig. 3 einen senkrechten Schnitt in Fahrzeugquerrichtung durch einen auf einem Fahrzeugdach befestigten Leuchtschildkasten;

Fig.4 einen senkrechten Schnitt in Fahrzeuglängsrichtung durch den Leuchtschildkasten gemäß Linie IV-IV der Fig.3;

Fig.5 einen senkrechten Schnitt in Fahrzeugquerrichtung durch denselben auf einem Fahrzeugdach befestigten Leuchtschildkasten mit abgeänderter Spannklauenbefestigung;

Fig.6 eine Ansicht der Spannklaue gemäß Fig.5, jedoch in vergrößerter Darstellung;

Fig.7 einen senkrechten Schnitt durch den Befestigungsbereich Leuchtschildkasten -Autodach, jedoch mit gegenüber Fig.5 abgeänderter Längskante des Fahrzeugs im Dachbereich.

Ein erfindungsgemäßer Leuchtschildkasten besteht aus einem Trägerteil 10 und einem in diesem Trägerteil integrierten Leuchtschild 11. Das Trägerteil 10 ist ein einstückiges Kunststoffteil und hat eine der Dachbreite eines Personenkraftwagens 12 entsprechende Länge. Mit seiner längs einer geschlossenen Linie umlaufenden Unterkante und einem auf diese Unterkante aufgesteckten Dichtungsstreifen 13 stützt das Trägerteil 10 an der Dachoberfläche ab.

Von seiner Unterkante aus verjüngt sich das Trägerteil 10 nach oben. Auf dem größten Teil der Oberfläche des Leuchtschildkastens befindet sich das Leuchtschild 11, welches in der Oberfläche des Trägerteils 10 integriert ist. Dieses Leuchtschild 11 ist ein gewölbter Schirm, der zwei parallele geradlinige Unterkanten 14 und zwei parallele gekrümmte Seitenkanten 15 hat. Das Leuchtschild 11 ist aus einer ebenen rechteckförmigen Scheibe gewölbt geformt vorstellbar. Sein konstanter Querschnitt in Fahrzeuglängsrichtung hat eine parabolische Form. Im Ausführungsbeispiel ist jeweils zur Fahrzeugvorderseite und zur Fahrzeugrückseite hin die Beschriftung "Taxi" auf dem Leuchtschild 11 angebracht. Dabei sind die Buchstaben des Leuchtschildes 11 lichtdurchlässig, während die übrige Fläche lichtundurchlässig ist.

Unterhalb des Leuchtschildes 11 befindet sich in dem Trägerteil 10 ein Lampenraum 16, der an einem Boden 17 unten endet. Dieser Boden 17 des Trägerteils 10 ist in einem Abstand über dem Dach des Personenkraftwagens 12 angeordnet, wenn der Leuchtschildkasten auf dem Dach montiert ist. In dem Boden 17 befinden sich mehrere senkrechte Bohrungen in Abständen hintereinander, in welchen Lampenfassungen 18 so eingesetzt sind, daß sich im Lampenraum 16 Glühlampen 19 in die Lampenfassungen 18 einsetzen lassen. Diese Glühlampen 19 unterhalb des Leuchtschildes 11 bewirken im eingeschalteten Zustand das Leuchten der Beschriftung. Vom Boden 17 aus ragen zwei senkrechte Trennwände 20 auf, die den Lampenraum 16 in drei Abschnitte einteilen. Im größten und mittleren Teil befinden sich die Glühlampen 19. Über den äußeren Teilen des Lampenraumes 16 kann das Leuchtschild 11 weitere Informationsangaben, beispielsweise Symbole, erhalten, die dann durch hier einzusetzende Glühlampen ebenfalls wahlweise beleuchtet werden können. Die Trennwände 20 können mit einer lichtreflektierenden Schicht belegt oder aus einem lichtreflektierenden Material hergestellt sein, so daß das von den Glühlampen 19 kommende Licht hier zu der Beschriftung abgelenkt wird. Dadurch wird die Lichtausbeute des Leuchtschildkastens erhöht.

Das Leuchtschild 11 läßt sich mit Hilfe von Schrauben 21 an dem Trägerteil 10 lösbar befestigen. In der Nähe der Seitenkanten 15 des Leuchtschildes 11 endet der Trägerteil 10 in geneigten Stirnflächen 22, an denen außen Klauengehäuse 23 ausgebildet sind. Jedes Klauengehäuse ist an seiner Unterseite offen und enthält eine Greifklaue 24 zum Befestigen des Trägerteils 10 an dem Personenkraftwagen 12. Jede Greifklaue 24 hintergreift eine Längskante des Fahrzeugs im Dachbereich und läßt sich mit Hilfe einer Spannschraube 25, auf der eine innerhalb des Greifklaue 24 befindliche Mutter 26 aufgeschraubt ist, anziehen und somit das Trägerteil 10 am Fahrzeug befestigen.

Das Trägerteil 10 mit dem Leuchtschild 11 west im am Fahrzeug montierten Zustand eine aerodynamisch günstige Form auf. Der Leuchtschildkasten ermöglicht eine korrekte sichere und dichte Anpassung an jede Fahrzeugdachform und hat den Vorteil einer erheblichen Minderung der Windgeräusche, auch bei geöffnetem Schiebedach, gegenüber herkömmlichen Leuchtschildkästen. Infolge der strömungsgünstigen Form ergibt sich eine erhebliche Verminderung der Luftreibung und damit verbunden eine Kraftstoffeinsparung im Fahrbetrieb. Vor Benutzung einer automatischen Waschanlage ist eine Demontage des Leuchtschildkastens nicht mehr erforderlich. Die Aufteilung des Leuchtraums 16 unter dem Leuchtschild 11 ermöglicht es, weitere Symbole auf dem Leuchtschild 11 anzubringen.

Bei einer abgeänderten Ausführungsform wird ebenfalls das Leuchtschild 11 mit Hilfe von Schrauben 21 an dem Trägerteil 10 lösbar befestigt. In der Nähe der Seitenkanten 15 des Leuchtschildes 11 endet der Trägerteil 10 in geneigten Stirnflächen 22, an denen außen Spannklötze 30 ausgebildet sind. Jeder Spannklotz 30 und 30a weist eine zur Stirnfläche 22 in einem Winkel stehende Spannfläche 31 auf, der eine Spannklaue 32 zugeordnet ist. Jede Spannklaue 32 hintergreift eine Längskante des Fahrzeugs im Dachbereich, wobei der mit der Dachlängskante in Berührung kommende Teil der Spannklaue 32 eine Kunststoffbeschichtung 33 aufweisen kann, mit der eine Beschädigung der Dachkarosserie bzw. der Lackierung vermieden wird. Der dem die Dachlängskante hintergreifenden Teil gegenüberliegende Bereich der Spannklaue 32 ist so abgekantet, daß er einen nach unten offenen Aufnahmeraum 34 für eine dort einzulegende Mutter 35 bildet.

Der den Aufnahmeraum 34 in der Höhe begrenzende Schenkel 36 stützt sich mit seinem Stirnende 37 auf der Spannfläche 31 des Spannklotzes 30 ab, wobei die Höhe einer eingelegten Mutter 35 der Höhe des Aufnahmeraumes 34 entsprechen kann. Der zum Schenkel 36 in einem rechten Winkel stehende Boden 38 des Aufnahmeraumes 34 weist eine Durchgangsbohrung 39 für eine durchzusteckende und in die Mutter 35 einzuschraubende Spannschraube 40 auf. Durch Anziehen der Spannschraube 40 läßt sich die Spannklaue 32 anziehen und somit das Trägerteil 10 am Fahrzeug 12 befestigen. Durch die Anordnung eines Spannklotzes 30 auf der Stirnfläche 22 und der sich einerseits auf der Spannfläche 31 des Spannklotzes 30 sich abstützenden und andererseits die Dachlängskante hintergreifenden Spannklaue 32 ist eine besonders einfache und schnelle Montage und Demontage des Leuchtschildkastens gewährleistet, wobei die Spannklaue 32 durch ihre Formgebung bei Personenkraftwagen mit unterschiedlicher Dachlängskante Verwendung finden kann.

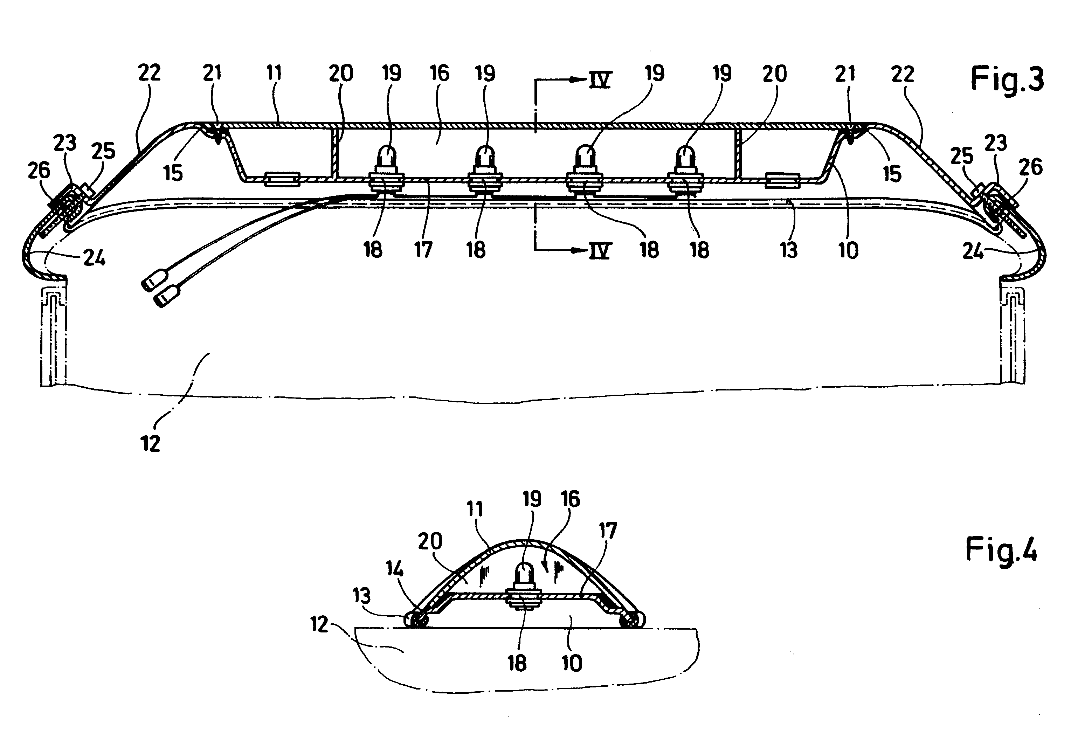

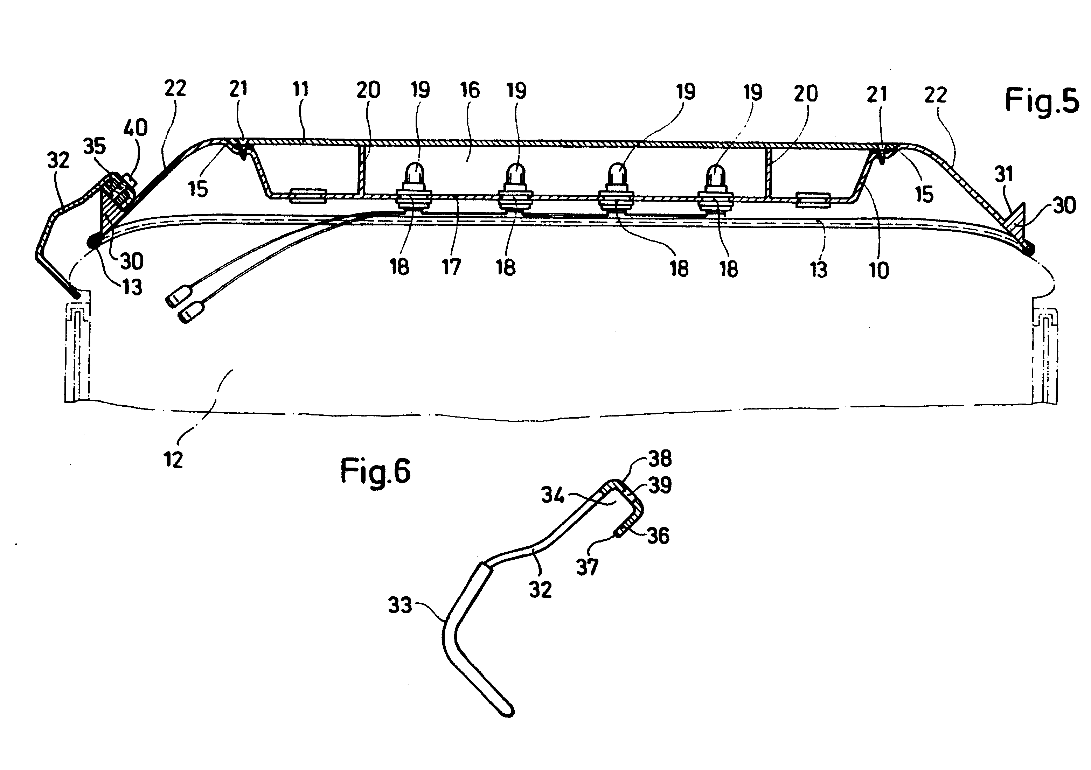

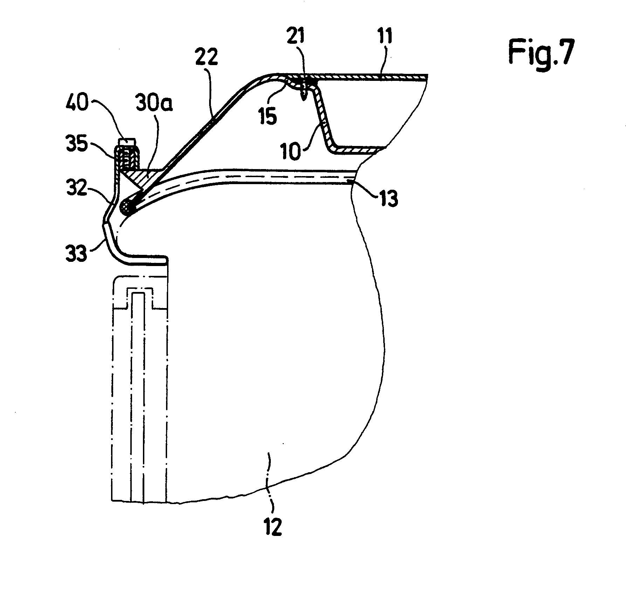

Während bei der Ausführung gemäß Fig.3 und 4 die Greifklaue 24 in sich abgebogen ist, zeigt die abgeänderte Ausführung gemäß Fig.5 bis 7 eine Spannklaue 32 mit mittleren Abkantungen und endseitiger Abrundung.

## Ansprüche

1. Leuchtschildkasten für die Anbringung am Dach eines Kraftfahrzeugs, mit einem Anzeigesymbole oder Hinweisbeschriftungen, wie "Taxi" o.dgl. enthaltenden Leuchtschild, dadurch gekennzeichnet, daß das Leuchtschild (11) eine dachähnlich gewölbte Form mit zwei parallelen geradlinigen Unterkanten (14) und zwei parallelen gekrümmten Seitenkanten (15) aufweist und in einem Trägerteil (10) mit entsprechend geformten Anlagekanten integriert ist.

2. Leuchtschildkasten nach Anspruch 1, dadurch gegekennzeichnet, daß das Leuchtschild (11) einen konstanten, die Form der Seitenkanten (15) bildenden Querschnitt aufweist.

3. Leuchtschildkasten nach den Ansprüchen 1 und 2, dadurch gekennzeichnet, daß der Querschnitt des Leuchtschildes (11) parabelförmig ist.

4. Leuchtschildkasten nach den Ansprüchen 1 bis 3, dadurch gekennzeichnet, daß in dem Trägerteil (10) unterhalb des Leuchtschildes (11) ein Lampenraum mit mehreren Glühlampen (16) vorgesehen ist, der von einem Boden (17) des Trägerteils (10) nach unten begrenzt ist.

5. Leuchtschildkasten nach den Ansprüchen 1 bis 4, dadurch gekennzeichnet, daß die Lampenfassungen (18) der Glühlampen (19) in Bohrungen des Bodens (17) angeordnet sind.

6. Leuchtschildkasten nach den Ansprüchen 1 bis 5, dadurch gekennzeichnet, daß in dem Lampenraum (16) von dem Boden (17) des Trägerteils (10) aufragende, zu den Ebenen der Seitenkanten (15) des Leuchtschilds (11) parallel Trennwände (20) mit lichtreflektierender Oberfläche angeordnet sind.

7. Leuchtschildkasten nach den Ansprüchen 1 bis 6, dadurch gekennzeichnet, daß die Grundfläche des Trägerteils (10) von einer unterhalb des Bodens (17) befindlichen, längs einer geschlossenen Linie umlaufenden Unterkante begrenzt ist, längs der ein elastischer Dichtungsstreifen (13) beidseitig angeordnet ist.

8. Leuchtschildkasten nach den Ansprüchen 1 bis 7, dadurch gekennzeichnet, daß das Trägerteil (10) als einstückiges Kunststoffteil ausgebildet ist.

9. Leuchtschildkasten nach den Ansprüchen 1 bis 8, dadurch gekennzeichnet, daß das Trägerteil (10) in Längsrichtung des Leuchtschilds (11) in geneigten Stirnflächen (22) endet, an denen jeweils ein Klauengehäuse (23, 24) mit einer Greifklaue (24, 32) angeordnet ist.

10. Leuchtschildkasten nach den Ansprüchen 1 bis 9, dadurch gekennzeichnet, daß jede Greifklaue (24, 32) mit einer Spannschraube (25, 40) und einer aufgeschraubten Mutter (26, 35) in dem Klauengehäuse (23, 34) festspannbar ist.

11. Leuchtschildkasten nach einem der Ansprüche 1 bis 10, dadurch gekennzeichnet, daß an den geneigten Stirnflächen (22) Spannklötze (30, 30a ) mit einer Spannfläche (31) angeordnet sind.

12. Leuchtschildkasten nach einem der Ansprüche 1 bis 11, dadurch gekennzeichnet, daß an dem Spannklotz (30, 30a) eine Spannklaue (32) angreift, deren oberer dachförmiger Bereich einen offenen Aufnahmeraum (34) mit eingesetzter Mutter (35) bildet.

13. Leuchtschildkasten nach einem der Ansprüche 1 bis 12, dadurch gekennzeichnet, daß das freie Ende der Spannklaue (24, 34) mit einer Schutzschicht (33) aus Kunststoff o.dgl. belegt ist.

14. Leuchtschildkasten nach einem der Ansprüche 1 bis 13, dadurch gekennzeichnet, daß die Greifklaue (24) abgerundet und/oder die Spannklaue (32) in sich abgewinkelt ist.

# Fig.1

# Fig.2

Fig.3

Fig.4

0 287 835

**Fig.5**

**Fig.6**

0 287 835

# Fig.7